# EUROPEAN PATENT APPLICATION

(11) **EP 4 707 359 A1**
(43) Date of publication of application: **11.03.2026**
(21) Application number: 25795388.5
(22) Date of filing: 08.01.2025
(51) Int. Cl.: C10G 1/00, C10G 1/10, C10G 51/02, C10G 7/00

(54) **METHOD OF PREPARING PYROLYSIS OIL FROM WASTE PLASTICS**

(30) Priority: 26.06.2024 KR 20240093799
(71) Applicant: LG Chem, Ltd., Seoul 07336 (KR)
(72) Inventor: JEONG, Jun Kyo, Daejeon 34122 (KR); LEE, Sang Beom, Daejeon 34122 (KR); LEE, Sung Ho, Daejeon 34122 (KR); NA, Su Jin, Daejeon 34122 (KR); PARK, Jong Seong, Daejeon 34122 (KR); LEE, Dong Min, Daejeon 34122 (KR); AN, Ji Won, Daejeon 34122 (KR)
(74) Representative: Goddar, Heinz J.
(86) International application number: PCT/KR2025/000391
(87) International publication number: WO 2026/005166

(57) **Abstract**

The present invention provides a method of preparing pyrolysis oil from waste plastics, the method including (S1) feeding a waste plastic raw material to a first reactor, performing primary pyrolysis, and discharging a gaseous stream produced by the pyrolysis through an upper portion of the first reactor; (S2) feeding the upper gaseous stream of the first reactor to one or more distillation columns and separating the upper gaseous stream according to boiling points to obtain a stream containing light oil (LO) of C₅₋₁₂, a stream containing middle oil (MO) of C₁₃₋₂₂, and a stream containing heavy oil (HO) of C₂₃ or higher; and (S3) feeding a part of the stream containing the middle oil (MO) separated in the distillation column to a second reactor, performing secondary pyrolysis, and feeding a gaseous stream produced by the secondary pyrolysis to the distillation column, wherein the primary pyrolysis and the secondary pyrolysis are each performed under high pressure conditions of 2 to 40 bar.

## Description

### [Technical Field]

### CROSS-REFERENCE TO RELATED APPLICATIONS

This application is a National Stage Application of International Application No. PCT/KR2025/000391 filed on January 8, 2025, which claims the benefit of and priority to Korean Patent Application No. 10-2024-0083799, filed on June 26, 2024, the entire contents of which are incorporated herein by reference.

### Technical Field

The present invention relates to a method of preparing pyrolysis oil from waste plastics, and more particularly, to a method of preparing light hydrocarbon oil with a high yield from a waste plastic raw material.

### [Background Art]

Recently, the development and use of plastics having physical properties required for various applications and purposes have increased. Plastics require a lot of energy from crude oil extraction to preparation, and a large amount of carbon is emitted in the process. Furthermore, even when plastics used in various products are discarded, environmental pollution and enormous disposal costs occur, and thus, recycling of waste plastics has become an important social issue.

In general, methods of recycling waste plastics (resins) include mechanical recycling, chemical recycling, and thermal recycling. Mechanical recycling is a method of crushing and sorting collected waste plastics, separating the waste plastics by type, melting the waste plastics using an extruder, and mixing the waste plastics with a new material at a certain ratio or adding a functional additive when pelletizing the waste plastics to produce a resin product. Chemical recycling is a method of extracting only a specific polymer or recovering and repolymerizing pure single molecules using various chemical means. Thermal recycling is a method of burning waste plastics and recovering the waste plastics as heat energy.

In particular, chemical recycling may reduce greenhouse gases compared to incineration of waste plastics and has recently received attention in terms of alternative fuel development.

For example, when a waste plastic such as a polyethylene or polypropylene material is heated and pyrolyzed at a certain temperature, a gaseous stream containing a mixture of non-condensable gas and liquid oil may be produced, and highly viscous residual wax that is not completely decomposed may be discharged. In accordance with an increase in the importance of liquid oil in the pyrolysis product as a raw material for producing a petrochemical product, studies to increase the yield of the liquid oil have been actively conducted.

The liquid oil produced by the pyrolysis of waste plastics, that is, pyrolysis oil, is usually mixed oil including light hydrocarbon oil of C₅₋₁₂ such as naphtha and longer-chain hydrocarbon oil.

Conventionally, a method of performing a contact decomposition reaction by catalytic cracking, a method of condensing heavy hydrocarbon (that is, long-chain hydrocarbon) components in a pyrolysis product of waste plastics using a contactor, which is a contact heat exchanger, and then circulating the components to a pyrolysis reactor so that the components are subjected to the pyrolysis process again, and the like have been proposed to promote the pyrolysis of waste plastics. However, these methods are limited in improving pyrolysis efficiency of waste plastics.

In particular, the contactor may be disposed at an upper portion of the pyrolysis reactor to improve selectivity only for pyrolysis oil components in a specific boiling point range (for example, long-chain hydrocarbons at 240 to 280°C).

In addition, the conventional waste plastic pyrolysis process has typically been performed under atmospheric pressure conditions. In the pyrolysis process under atmospheric pressure conditions, the discharge through the upper portion of the reactor contains a large amount of high-boiling point components, and thus, the yield of high-value-added light hydrocarbon oil is limited, and the amount of heavy oil components produced and the amount of residual wax discharged are excessive.

Therefore, there is a need to develop a technique capable of improving a pyrolysis process of waste plastics and improving a yield of high-quality light hydrocarbon oil.

### [Disclosure]

### [Technical Problem]

In order to solve the problems mentioned in the background art, an object of the present invention relates to a method of preparing light hydrocarbon oil with a high yield by, instead of using a contactor (heat exchanger), connecting one or more distillation columns in series, to an upper portion of a reactor for pyrolyzing waste plastics to separate high-boiling point components in a pyrolysis product into middle oil (MO) and heavy oil (HO), and then performing additional pyrolysis, while controlling a reaction pressure during the pyrolysis to suppress vaporization of the high-boiling point components and to selectively increase a residence time of a liquid-phase reaction.

### [Technical Solution]

In one general aspect, a method of preparing pyrolysis oil from waste plastics includes (S1) feeding a waste plastic raw material to a first reactor, performing primary pyrolysis, and discharging a gaseous stream produced by the pyrolysis through an upper portion of the first reactor; (S2) feeding the upper gaseous stream of the first reactor to one or more distillation columns and separating the upper gaseous stream according to boiling points to obtain a stream containing light oil (LO) of C₅₋₁₂, a stream containing middle oil (MO) of C₁₃₋₂₂, and a stream containing heavy oil (HO) of C₂₃ or higher; and (S3) feeding a part of the stream containing the middle oil (MO) separated in the distillation column to a second reactor, performing secondary pyrolysis, and feeding a gaseous stream produced by the pyrolysis to the distillation column, wherein the primary pyrolysis and the secondary pyrolysis are each performed under high pressure conditions of 2 to 40 bar.

### [Advantageous Effects]

According to the present invention, the waste plastic raw material is subjected to the primary pyrolysis in the first reactor under high pressure conditions higher than atmospheric pressure, the upper gaseous stream discharged from the first reactor is separated according to boiling points in one or more distillation columns, and then, a part of the middle oil (MO) among the separated components is subjected to the secondary pyrolysis in the second reactor under high pressure conditions higher than atmospheric pressure, such that the yield of high-quality light oil (LO) may be improved. In particular, the high pressure conditions during the primary pyrolysis and the secondary pyrolysis may improve the decomposition efficiency of waste plastics by suppressing the vaporization of high-boiling point components and selectively increasing the residence time of liquid components in the reactor, and through this, the selectivity and production of light hydrocarbon oil in the pyrolysis product may be further increased.

In addition, the upper operating temperature of the distillation column is controlled to a predetermined range, such that a fraction of the light oil (LO) component in the gaseous stream separated in the distillation column may be increased, and in the process in which the gaseous stream exchanges heat with water in the condenser connected to the upper portion of the distillation column to obtain a liquid phase, the water fed to the condenser may be converted into steam by recovering the waste heat of the gaseous stream.

Furthermore, the use of the light hydrocarbon oil obtained from the pyrolysis of waste plastics may reduce greenhouse gas emissions caused when feeding a raw material in a petrochemical process, may improve process efficiency such as energy consumption saving, and may be environmentally advantageous as no harmful gases are produced when treating waste plastics.

### [Description of Drawings]

FIG. 1 illustrates a pyrolysis process of waste plastics according to an example of the present invention.
FIG. 2 illustrates a pyrolysis process of waste plastics according to a comparative example.

### [Best Mode]

The terms and words used in the description and claims of the present invention are not to be construed limitedly as having general or dictionary meanings but are to be construed as having meanings and concepts meeting the technical idea of the present invention, based on a principle that the inventors are able to appropriately define the concepts of terms in order to describe their own inventions in the best mode.

The meaning of "including" or "containing" used in the present application concretely specifies a specific property, region, integer, step, operation, element, or component, and does not exclude the addition of another specific property, region, integer, step, operation, element, or component.

The term "stream" used in the present application may refer to a flow of a fluid in a process, and may also refer to a fluid flowing through a pipe itself. Specifically, the stream may refer to both a fluid flowing through a pipe connecting respective devices to each other itself and a flow of a fluid. In addition, the fluid may include any one or more components of gas, liquid, and solid.

The term "upper portion" used in the present application refers to a point at a height of 0 to 20% of the total height downwards from the uppermost portion of a device, unless otherwise specified, and specifically, may refer to the uppermost portion (the top). In addition, the term "lower portion" refers to a point at a height of 80 to 100% of the total height downwards from the uppermost portion of the device, and specifically, may refer to the lowest portion (the bottom). In addition, the term "side cut" refers to the middle portion located on the side of the device. That is, the components leaking out through the side cut may leak out from the middle portion of the device excluding trays of the top and the bottom of the device.

The term "Cₙ" used in the present application refers to all hydrocarbons having n carbon atoms, and for example, "C₅₋₁₂" refers to all hydrocarbon molecules having 5 to 12 carbon atoms.

The terms such as "first", "second", "primary", and "secondary" used in the present application may be used to simply distinguish a corresponding component from another component, and do not limit the corresponding components in another aspect (for example, importance or order).

The term "liquid oil" used in the present application refers to a product obtained by converting a gaseous stream obtained in a pyrolysis step into a liquid phase by condensation, and may also be referred to as "liquid distilled oil".

The "pressure" referred to in the present application refers to an absolute pressure measured based on a complete vacuum.

The "boiling point" referred to in the present application refers to a boiling point at atmospheric pressure (1 bar).

According to an embodiment of the present invention, a method of preparing pyrolysis oil from waste plastics includes (S1) subjecting a waste plastic raw material to primary pyrolysis; (S2) separating a pyrolyzed gaseous stream according to boiling points; and (S3) subjecting a part of separated middle oil to secondary pyrolysis.

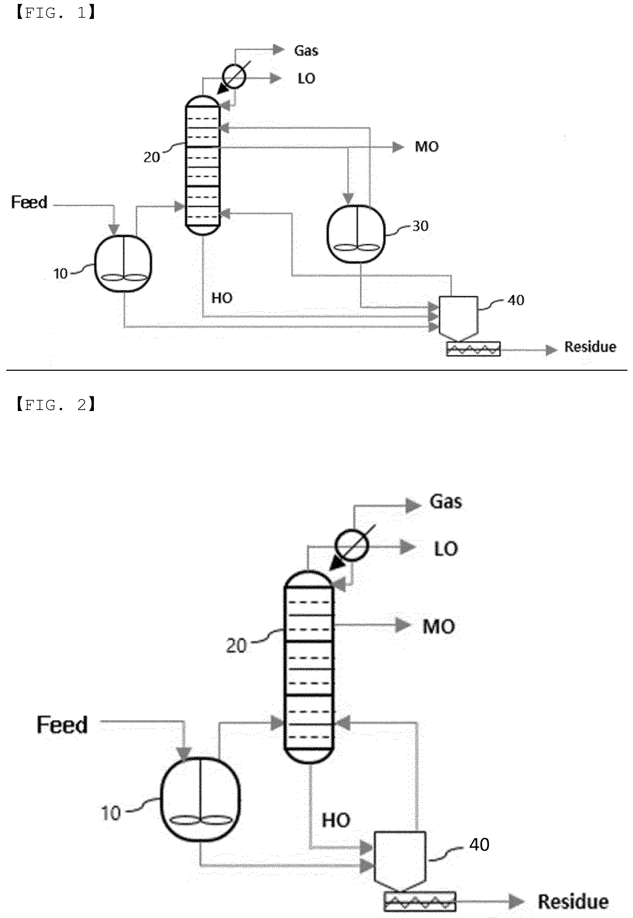

As illustrated in FIG. 1, the method may be performed using a process system including a first reactor 10 to which a waste plastic raw material is fed, one or more distillation columns 20 connected in series to the first reactor, a second reactor 30 connected to the distillation column 20, and an additionally connected residue treatment reactor 40.

Hereinafter, the method of preparing pyrolysis oil from waste plastics according to the present invention will be described in detail for each step with reference to the drawings.

First, a waste plastic raw material is fed to the first reactor 10, primary pyrolysis is performed, and a gaseous stream produced by the pyrolysis is discharged through an upper portion of the first reactor 10 (S1).

The waste plastics may include a natural polymer, a synthetic polymer, or a mixture thereof, and the synthetic polymer may include thermoplastic resins such as polyethylene, polypropylene, and polystyrene. In addition, the thermoplastic resin may be a mixture of comprising other types of resins such as PVC and PET, a thermosetting resin, and the like.

The waste plastics such as these materials may be subjected to, after collecting and sorting, a pretreatment process including crushing, washing, drying, and melting. The pretreatment process may be performed by a general method in the art.

For example, a size of crushed waste plastic is not particularly limited, but the waste plastics may typically be crushed in a size range of 0.5 to 6.0 cm, and then, the washed and dried waste plastic crushed material may be put into a tubular melter such as an extruder and then melted. The extruder has an extrusion function by melting and kneading, and may be, for example, a twin-screw extruder. In a case where the waste plastic is a thermoplastic resin such as polyethylene, polypropylene, or a mixture thereof, a melting temperature may be 120 to 350°C or 150 to 250°C, but is not limited thereto.

The waste plastic melt obtained by the pretreatment process is fed to the first reactor for pyrolysis.

The pyrolysis reactor that may be used in the present invention may be a stirred tank reactor equipped with an agitator, the agitator is not particularly limited as long as it may sufficiently agitate the waste plastic melt fed as a raw material, and may be, for example, a helical ribbon type or an anchor type, and it is advantageous to maintain a gap of about 5 mm to 1 cm from an inner wall of the reactor to maximize agitation of the waste plastics and heat transfer through the wall of the reactor. In addition, the reactor may be operated in either a batch type or continuous type. In addition, the reactor may be purged with nitrogen to maintain an oxygen-free or low-oxygen atmosphere while performing a pyrolysis reaction of the waste plastic melt.

The waste plastic melt is fed to the first reactor equipped with the agitator and heated while operating the agitator to perform pyrolysis of the waste plastic melt.

The heating of the waste plastics may be performed by transferring high-temperature heat to the waste plastics by passing high-temperature/high-pressure steam, hot water, heat transfer fluid, or the like through a jacket provided on the outside of the reactor, but is not particularly limited thereto.

In an embodiment of the present invention, the primary pyrolysis in the first reactor may be performed under high pressure conditions of 2 to 40 bar.

Since the existing waste plastic pyrolysis process is usually performed under atmospheric pressure conditions, C₁₋₄ gas components, C₅₋₁₂ light hydrocarbons such as naphtha, and longer-chain hydrocarbons are vaporized and discharged through the upper portion of the reactor, and residual wax that is not vaporized remains at a lower portion of the reactor. In the pyrolysis process under atmospheric pressure conditions, the discharge through the upper portion of the reactor contains a large amount of high-boiling point components, and thus, the yield of high-value-added light hydrocarbon oil is limited, and the amount of heavy oil components produced and the amount of residual wax discharged are excessive.

Accordingly, in the present invention, in order to increase the selectivity for conversion into light hydrocarbons during the pyrolysis of waste plastics, the pressure of the reactor in which pyrolysis is performed is controlled to a pressure higher than atmospheric pressure, for example, a pressure of 2 to 40 bar, specifically 2 to 30 bar, and more specifically 2 to 10 bar. Unlike the existing method of maintaining atmospheric pressure conditions by opening the pyrolysis reactor, in the present invention, a pressure control valve (PCV) is installed at the upper portion of the first reactor, and an exhaust process (vapor venting) is performed by the PCV, such that the reaction pressure may be controlled to a high pressure during the pyrolysis. For example, in a case where a gas with a certain pressure or higher is generated during the pyrolysis reaction of waste plastics, the gaseous stream produced during the pyrolysis reaction may be continuously discharged through the upper portion of the reactor while controlling an exhaust amount by the PCV so that an internal pressure of the reactor is maintained at 2 to 40 bar.

By maintaining the high pressure inside the reactor, vaporization of high-boiling point components during the pyrolysis of waste plastics may be suppressed and a liquid-phase residence time of the high-boiling point components may be increased. The increase in liquid-phase residence time improves the decomposition reaction efficiency of waste plastics and increases the selectivity for conversion into light hydrocarbons, such that high-value-added light hydrocarbon oil may be prepared with a high yield.

That is, in a case where the pressure of the first reactor is controlled to be higher than atmospheric pressure, as the liquid-phase residence time is increased, the pyrolysis reaction of waste plastics may be performed for 1 to 8 hours, and specifically, 2 to 6 hours, and in this process, a conversion rate of polymers into light hydrocarbons, for example, C₅₋₁₂ hydrocarbons, may be increased.

When the pressure during the primary pyrolysis in the first reactor is less than 2 bar, the vaporization of high-boiling point components in the first reactor may not be efficiently suppressed, and thus, a proportion of high-boiling point components having more than 12 carbon atoms in an upper discharge stream of the first reactor may increase. Meanwhile, when the pressure during the primary pyrolysis exceeds 40 bar, C₁₂ or lower hydrocarbons may not be discharged through the upper portion of the reactor and may remain inside the reactor for a long time, resulting in excessive production of pyrolysis by-product gas (for example, C₁₋₄ gas) that is non-condensable and may not be liquefied at room temperature.

In an embodiment of the present invention, the primary pyrolysis in the first reactor may be performed at 400 to 450°C. The waste plastic raw material is mainly a thermoplastic resin, and for example, considering that the waste plastic raw material may be a mixture containing polyethylene having a number average molecular weight of 10,000 to 500,000, and specifically, 100,000 to 300,000, or polypropylene having a number average molecular weight of 5,000 to 300,000, and specifically, 10,000 to 200,000, the pyrolysis reaction is advantageously performed at 400 to 450°C, and specifically, 420 to 430°C. When the primary pyrolysis temperature is lower than 400°C, a pyrolysis rate may be slow, and when the primary pyrolysis temperature is higher than 450°C, the pyrolysis rate may be fast, but an excessive amount of solid carbides such as char may be produced due to a high temperature.

In addition, the primary pyrolysis reaction time in the first reactor may be determined by considering the time when a production rate of light hydrocarbons having 12 or fewer carbon atoms increases in a temperature range of 400 to 450°C after the start of the pyrolysis reaction of waste plastics.

When the waste plastic raw material is pyrolyzed in the first reactor 10, a gaseous stream containing C₁₋₄ gas components, C₅₋₁₂ light hydrocarbons such as naphtha, and longer-chain hydrocarbon components such as C₁₃₋₂₂ hydrocarbon and C₂₃ or higher hydrocarbon components is discharged through the upper portion of the reactor, and highly viscous residual wax is not vaporized and remains at the lower portion of the reactor. For example, pyrolysis gas may be produced in an amount of 20 to 95 wt% or 60 to 95 wt% with respect to the weight of the waste plastic raw material fed to the first reactor 10 and may be discharged through the upper portion of the reactor, and the remainder may remain as residual wax.

Subsequently, the gaseous stream discharged through the upper portion of the first reactor 10 is fed to one or more distillation columns 20 and separated according to boiling points (S2).

The one or more distillation columns 20 may be disposed in series above the first reactor 10, and may separate the pyrolysis product transferred from the first reactor into components according to boiling points by selective heating and condensation. For example, the stream fed to each distillation column may be heated by heat provided from the reactor connected to a lower portion of the column, steam generated by the heating may move to an upper portion of the column and then discharged, and the discharged steam may be partially or completely condensed in a condenser connected to the upper portion of the column. A part of the condensate may be recycled into the column. More specifically, the one or more distillation columns 20 may have a multi-tray structure having 20 to 50 trays, in which as a temperature gradually decreases toward a tray located at an upper portion, hydrocarbon components having a relatively high boiling point may be separated from a tray located at a lower portion, carbon-hydrogen components having a relatively low boiling point may be separated from a tray located at the upper portion, and hydrocarbon components having a relatively medium boiling point may be separated from a tray located therebetween.

Therefore, in the present invention, the secondary pyrolysis is performed by disposing one or more distillation columns above the first reactor to separate the pyrolysis product according to boiling points, and feeding oil having a medium boiling point (for example, 210 to 360°C) discharged from a side cut at the middle tray of the distillation column to the second reactor 30, such that the yield of light oil (LO) may be improved.

In addition, in the present invention, the carbon range of the desired pyrolysis oil (distilled oil) may be changed by controlling an upper operating temperature of the distillation column. Through this, the limitation of selectively discharging only hydrocarbon components in a specific boiling point range by applying a contactor (heat exchanger) to the pyrolysis reactor in the existing pyrolysis process of waste plastics may be overcome.

Specifically, in a case where the upper operating temperature of the distillation column is increased, the carbon range of the pyrolysis oil moves to a high boiling point, and in a case where the upper operating temperature of the distillation column is lowered, the carbon range of the pyrolysis oil moves to a low boiling point, which may increase the yield of light oil such as naphtha.

For example, in a case where the upper portion temperature of the distillation column is controlled to 220°C to 300°C, a gaseous stream containing 80% or more of C₅₋₁₂ low-boiling point hydrocarbons and C₁₃₋₂₂ medium-boiling point hydrocarbons may be discharged. Meanwhile, in a case where the upper portion temperature of the distillation column is controlled to 150°C to lower than 220°C, a gaseous stream containing 70% or more of C₅₋₁₂ low-boiling point hydrocarbons may be discharged. The gaseous stream may be cooled and condensed by heat exchange with water connected to the upper portion of the distillation column and converted into liquid oil, and gas components (for example, C₁₋₄ hydrocarbons) that are not condensed in the heat exchange may be discharged through the upper portion. In this case, some components included in the condensed liquid oil, that is, the medium-boiling point or high-boiling point components, may be refluxed to the upper portion of the distillation column and move to the lower portion of the distillation column. As a result, light oil (LO) of C₅₋₁₂ may be discharged from the upper tray of the column, middle oil (MO) of C₁₃₋₂₂ may be discharged from the middle tray of the column, and heavy oil (HO) of C₂₃ or higher, for example, heavy oil (HO) of C₂₃₋₄₀ may be discharged from the lower tray of the column.

In addition, a dividing-wall distillation column (DWC) including two sections divided by a central dividing wall may be used as the distillation column 20, and a stream containing C₅₋₁₂ light hydrocarbons may be separated through an upper portion of the DWC, a stream containing C₁₃₋₂₂ middle hydrocarbons may be separated through a side portion of the DWC, and a stream containing C₂₃ or higher high-boiling point hydrocarbons may be separated through a lower portion of the DWC.

In addition, in a case where a plurality of distillation columns 20 are disposed, the operation may be performed by setting the temperatures of the condensers connected to the upper portions of the respective columns differently. That is, the carbon range of the pyrolysis oil (distilled oil) may be changed by setting the upper portion temperature of the upstream column to be relatively high and the upper portion temperature of the downstream column to be relatively low. For example, the upper portion temperature of the upstream column may be controlled to 220°C to 300°C, and the upper portion temperature of the downstream column may be controlled to 150°C to lower than 220°C. As described above, the upper gaseous stream discharged from each of the upstream and downstream columns may be condensed and then discharged as liquid oil, or a part of the upper gaseous stream may be refluxed to the upper portion of each column. In addition, middle oil (MO) of C₁₃₋₂₂ or heavy oil (HO) of C₂₃ or higher may be selectively discharged through the middle portion and the lower portion of each column.

As such, the gaseous stream produced by the primary pyrolysis of the waste plastic raw material may be separated according to boiling points in the one or more distillation columns to obtain a stream containing light oil (LO) of C₅₋₁₂, a stream containing middle oil (MO) of C₁₃₋₂₂, and a stream containing heavy oil (HO) of C₂₃ or higher.

In addition, in the process in which the gaseous stream exchanges heat with water to obtain a liquid phase in the condenser connected to the upper portion of the distillation column, the water fed to the condenser may be converted into steam by recovering waste heat of the gaseous stream.

In order to generate steam by recovering such waste heat, in the present invention, hot water at 60 to 100°C is used as water for heat exchange in the condenser disposed at the upper portion of the distillation column. The temperature of the water may be controlled depending on the desired pyrolysis oil composition.

In particular, in a case where the plurality of distillation columns are disposed, as described above, the condenser of the upstream column is operated at a high temperature and the condenser of the downstream column is operated at a low temperature, such that steam may be generated at different pressures. For example, in a case where the upper operating temperature of the distillation column is set to be high and the carbon range of the pyrolysis oil moves to a high boiling point, high-pressure steam may be generated through heat absorption of the condenser connected to the upper portion of the column. Meanwhile, in a case where the upper operating temperature of the distillation column is set to be low and the carbon range of the pyrolysis oil moves to a low boiling point, low-pressure steam may be generated.

Thereafter, a part of the stream containing C₁₃₋₂₂ middle oil (MO) separated from the distillation column 20 is fed to the second reactor 30, secondary pyrolysis is performed, and a gaseous stream produced by the secondary pyrolysis is fed to the distillation column 20 (S3).

Specifically, the C₁₃₋₂₂ middle oil (MO) separated from the distillation column 20 may be 30 to 85 wt% or 40 to 60 wt% with respect to the total weight of the stream, the C₁₃₋₂₂ middle oil (MO) may be fed to the second reactor 30, and the remaining stream may be discharged and used as fuel oil.

The second reactor 30 may be disposed in series with the distillation column 20. That is, the first reactor 10 is disposed on one side of the distillation column 20, and the second reactor 30 is disposed on the other side of the distillation column 20, such that the first reactor, the distillation column, and the second reactor may be disposed in series in order.

In an embodiment of the present invention, the secondary pyrolysis of the middle oil (MO) in the second reactor 30 may be performed at a high pressure of 2 to 40 bar, specifically, 2 to 30 bar, and more specifically, 2 to 10 bar.

Similar to the first reactor described above, a pressure control valve (PCV) may be installed at the upper portion of the second reactor to control the reaction pressure during the secondary pyrolysis to a high pressure, such that additional pyrolysis of the middle oil (MO) may be promoted to increase the production of light oil (LO).

When the pressure of the secondary pyrolysis in the second reactor is less than 2 bar, additional pyrolysis of the middle oil (MO) in the second reactor may not be sufficient, and when the pressure of the secondary pyrolysis exceeds 40 bar, C₁₂ or lower hydrocarbons may not be discharged through the upper portion of the reactor and may remain inside the reactor for a long time, which may result in excessive production of pyrolysis by-product gases (for example, C₁₋₄ gas) that are non-condensable and cannot be liquefied at room temperature.

The secondary pyrolysis under these high pressure conditions may be performed for 1 to 3 hours, and specifically, 1.5 to 2.5 hours. The secondary pyrolysis reaction time may be determined by considering the time when a production rate of light hydrocarbons having 12 or fewer carbon atoms increases after the start of the decomposition reaction of the middle oil (MO).

In addition, the secondary pyrolysis may be performed at 420°C to 450°C. When the secondary pyrolysis temperature is lower than 420°C, it is difficult to induce sufficient pyrolysis of the middle oil (MO), and when the secondary pyrolysis temperature is higher than 450°C, the formation of solid carbides such as char may be accelerated. In addition, when the secondary pyrolysis temperature is higher than the primary pyrolysis temperature, it may be more advantageous for the conversion into light oil (LO) through the pyrolysis of middle oil (MO).

Through the secondary pyrolysis, additional pyrolysis of the middle oil (MO) of C₁₃₋₂₂ obtained from the waste plastic raw material may be efficiently performed to convert the middle oil (MO) of C₁₃₋₂₂ to have a lower carbon number, and through this, the yield of finally obtained light oil (LO) of C₅₋₁₂ may be increased.

Meanwhile, a lower residue of the first reactor 10 remaining after the primary pyrolysis of the waste plastic raw material, heavy oil (HO) separated at the lower portion of the distillation column 20, and a lower residue of the second reactor 30 remaining after the secondary pyrolysis of the middle oil (MO) may all contain high-boiling point components of 360°C or higher, and have low utility because they cause process operation problems or deterioration of the quality of the final product.

Therefore, the lower residue of the first reactor 10, the stream containing the heavy oil (HO) separated in the distillation column 20, and the lower residue of the second reactor 30 may each be fed to a residue treatment reactor, additional pyrolysis is performed, and a gaseous stream produced by the additional pyrolysis may be recycled to the distillation column.

The residue treatment reactor 40 may include an upper section in which a pyrolysis reaction is performed and a lower section from which highly viscous residual wax is discharged.

Specifically, high-boiling point components fed to the residue treatment reactor 40 may be subjected to additional pyrolysis in the upper section of the residue treatment reactor 40, and it may be advantageous for the additional pyrolysis to be performed at a higher temperature than the pyrolysis of the first reactor or the second reactor. Meanwhile, the highly viscous residual wax that has not been pyrolyzed may remain in the lower section of the residue treatment reactor 40 and then be discharged.

In addition, the additional pyrolysis in the residue treatment reactor may be performed at a pressure of 0.9 to 1.1 bar for 1 to 3 hours, and specifically, 1.5 to 2.5 hours. The additional pyrolysis reaction time may be determined by considering the time when a production rate of low-boiling point hydrocarbons increases after the start of the decomposition reaction of the residue.

As described above, in the present invention, the waste plastic raw material is subjected to the primary pyrolysis in the first reactor under high pressure conditions higher than atmospheric pressure, the upper gaseous stream discharged from the first reactor is separated according to boiling points in one or more distillation columns, and then, a part of the middle oil (MO) among the separated components is subjected to the secondary pyrolysis in the second reactor under high pressure conditions higher than atmospheric pressure, such that the yield of high-quality light oil (LO) may be improved. In particular, the high pressure conditions during the primary pyrolysis and the secondary pyrolysis may improve the decomposition efficiency of waste plastics by suppressing the vaporization of high-boiling point components and selectively increasing the residence time of liquid components in the reactor, and through this, the selectivity and production of light hydrocarbon oil in the pyrolysis product may be further increased.

Therefore, the final pyrolysis oil obtained through the pyrolysis process according to the present invention may contain a high fraction of high-value-added light oil (LO) of C₅₋₁₂, and for example, a content of the finally obtained light oil (LO) of C₅₋₁₂ may be 50 to 70 wt%, and specifically 50 to 60 wt%, with respect to the weight of the waste plastic raw material. The light hydrocarbons obtained with a high yield may be condensed and then efficiently used as high-quality fuel oil.

In particular, in the present invention, the finally obtained C₅₋₁₂ light hydrocarbon fuel oil has a boiling point of 0 to 230°C, and specifically, 30 to 216°C, a kinematic viscosity at 40°C of 0.3 to 1.0 cSt, and specifically, 0.4 to 0.9 cSt, and a flash point of -80°C or higher (for example, -40°C), and may thus be efficiently used as a petrochemical raw material.

In addition, the upper operating temperature of the distillation column is controlled to a predetermined range, such that a fraction of the light oil (LO) component in the gaseous stream separated in the distillation column may be increased, and in the process in which the gaseous stream exchanges heat with water in the condenser connected to the upper portion of the distillation column to obtain a liquid phase, the water fed to the condenser may be converted into steam by recovering the waste heat of the gaseous stream.

Furthermore, the use of the light hydrocarbon oil obtained from the pyrolysis of waste plastics may reduce greenhouse gas emissions caused when feeding a raw material in a petrochemical process, may improve process efficiency such as energy consumption saving, and may be environmentally advantageous as no harmful gases are produced when treating waste plastics.

Hereinafter, the present invention will be described in more detail with reference to examples. However, the following examples are provided for illustrating the present invention. It is apparent to those skilled in the art that various modifications and alterations may be made without departing from the scope and spirit of the present invention, and the scope of the present invention is not limited thereto.

### Example 1:

As illustrated in FIG. 1, pyrolysis of waste plastics was performed using a process system including a first reactor 10, a distillation column 20, a second reactor 30, and a residue treatment reactor 40.

First, 100 parts by weight of a waste plastic melt containing polyethylene (PE) and polypropylene (PP) at a weight ratio of 6:4 was fed to the stirred first reactor 10, the reactor 10 was heated by an external heating means, and when the temperature reached 430°C, a primary pyrolysis reaction was performed for 2 hours while maintaining a constant temperature. At this time, the amount of steam exhausted during the pyrolysis reaction was controlled using a pressure control valve (PCV) installed at an upper portion of the first reactor, thereby maintaining the internal pressure of the first reactor at 10 bar.

A gaseous stream discharged through the upper portion of the first reactor 10 was fed to the distillation column 20 and separated into components according to boiling points by simple distillation. Specifically, the column was operated at an upper portion temperature of 210°C, the gaseous stream was discharged through an upper portion and cooled to 25°C in a condenser to obtain condensed liquid light oil (LO) of C₅₋₁₂, and non-condensed gas components were discharged. Subsequently, a stream containing middle oil (MO) of C₁₃₋₂₂ was obtained in the middle tray of the column, and a lower stream containing heavy oil (HO) of C₂₃₋₄₀ was discharged from a lower tray of the column.

A part of the middle oil (MO) having a boiling point of 210 to 360°C separated from the distillation column 20 was fed to the second reactor 30 and subjected to secondary pyrolysis at 430°C for 2 hours. At this time, the amount of steam exhausted during the pyrolysis reaction was controlled using a pressure control valve (PCV) installed at an upper portion of the second reactor, thereby maintaining the internal pressure of the second reactor at 2 bar. A gaseous stream produced by the secondary pyrolysis was recycled to the distillation column 20.

In addition, a lower residue of the first reactor 10, a lower stream containing heavy oil (HO) separated from the lower tray of the distillation column 20, and a lower residue of the second reactor 30 were each fed to the residue treatment reactor 40, additional pyrolysis was performed at 1 bar and 430°C for 2 hours, a produced upper gaseous stream was recycled to a lower portion of the distillation column 20, and a residue remaining at the lower portion was discharged.

### Example 2:

The same process as that of Example 1 was performed, except that secondary pyrolysis of a part of the middle oil (MO) in the second reactor 30 was performed at a pressure of 5 bar.

### Example 3:

The same process as that of Example 1 was performed, except that secondary pyrolysis of a part of the middle oil (MO) in the second reactor 30 was performed at a pressure of 10 bar.

### Comparative Example 1:

As illustrated in FIG. 2, pyrolysis of waste plastics was performed using a process system including a first reactor 10, a distillation column 20, and a residue treatment reactor 40. Specifically, the same process as that of Example 1 was performed, except that secondary pyrolysis was not performed on a part of the middle oil (MO) separated in the distillation column 20.

### Comparative Example 2:

The same process as that of Example 1 was performed, except that primary pyrolysis in the first reactor 10 was performed at atmospheric pressure (1 bar).

### Comparative Example 3:

The same process as that of Example 1 was performed, except that secondary pyrolysis of a part of the middle oil (MO) in the second reactor 30 was performed at atmospheric pressure (1 bar).

Table 1 shows the compositions of the pyrolysis products obtained based on the feed in the examples and comparative examples analyzed by GC-MS.

**[Table 1]**

| | Primary pyrolysis | | Secondary pyrolysis | | Final pyrolysis oil composition |
|---|---|---|---|---|---|
| | Condition | Product (parts by weight with respect to raw material) | Condition | Product (parts by weight with respect to raw material) | |
| Example 1 | 430°C | C₁₋₄ gas 11 | 430°C | C₁₋₄ gas 3 | C₁₋₄ gas 14 |
| | 10 bar | C₅₋₁₂ LO36 | 2 bar | C₅₋₁₂ LO6 | C₅₋₂₂ LO42 |
| | | C₁₃₋₂₂ MO 36 (MO 30 is fed to second reactor) | | C₁₃₋₂₂ MO 21 | C₁₃₋₂₂ MO 27 |
| | | Residue 17 | | - | Residue 17 |
| Example 2 | 430°C | C₁₋₄ gas 11 | 430°C | C₁₋₄ gas 5 | C₁₋₄ gas 16 |
| | 10 bar | C₅₋₁₂ LO36 | 5 bar | C₅₋₁₂ LO9 | C₅₋₂₂ LO45 |
| | | C₁₃₋₂₂ MO 36 (MO 30 is fed to second reactor) | | C₁₃₋₂₂ MO 16 | C₁₃₋₂₂ MO 22 |
| | | Residue 17 | | - | Residue 17 |
| Example 3 | 430°C | C₁₋₄ gas 11 | 430°C | C₁₋₄ gas 7 | C₁₋₄ gas18 |
| | 10 bar | C₅₋₁₂ LO36 | 10 bar | C₅₋₁₂ LO11 | C₅₋₁₂ LO47 |
| | | C₁₃₋₂₂ MO 36 (MO 30 is fed to second reactor) | | C₁₃₋₂₂ MO 12 | C₁₃₋₂₂ MO 18 |
| | | Residue 17 | | - | Residue 17 |
| Comparative Example 1 | 430°C | C₁₋₄ gas 11 | - | - | C₁₋₄ gas 11 |
| | 10 bar | C₅₋₁₂ LO36 | | | C₅₋₁₂ LO36 |
| | | C₁₃₋₂₂ MO 36 | | | C₁₃₋₂₂ MO 36 |
| | | Residue 17 | | | Residue 17 |
| Comparative Example 2 | 430°C | C₁₋₄ gas 8 | 430°C | C₁₋₄ gas 3 | C₁₋₄ gas 11 |
| | 1 bar | C₅₋₁₂ LO21 | 2 bar | C₅₋₁₂ LO6 | C₅₋₁₂ LO27 |
| | | C₁₃₋₂₂ MO 40 (MO 30 is fed to second reactor) | | C₁₃₋₂₂ MO 25 | C₁₃₋₂₂ MO 31 |
| | | Residue 31 | | - | Residue 35 |
| Comparative Example 3 | 430°C | C₁₋₄ gas 11 | 430°C | C₁₋₄ gas 1 | C₁₋₄ gas 12 |
| | 10 bar | C₅₋₁₂ LO36 | 1 bar | C₅₋₁₂ LO3 | C₅₋₁₂ LO39 |
| | | C₁₃₋₂₂ MO 36 (MO 30 is fed to second reactor) | | C₁₃₋₂₂ MO 26 | C₁₃₋₂₂ MO 32 |
| | | Residue 17 | | - | Residue 17 |

From Table 1, it can be confirmed that when waste plastics are subjected to primary pyrolysis under high pressure conditions of 10 bar in a first reactor, an upper gaseous stream discharged from the first reactor is separated according to boiling points in a distillation column, and then, 30 parts by weight out of 36 parts by weight of middle oil (MO) among the separated components was subjected to secondary pyrolysis in a second reactor, additional production of high-quality light oil (LO) is improved as the pressure increases under the same temperature conditions.

On the other hand, in Comparative Example 1, as secondary pyrolysis was not performed, the yield of light oil (LO) did not increase.

In Comparative Example 2, as the pressure of the first reactor was controlled to atmospheric pressure, the yield of light oil (LO) in the primary pyrolysis decreased while the residue increased, and even when the secondary pyrolysis was performed at a pressure higher than atmospheric pressure, the yield of light oil (LO) was the lowest.

In Comparative Example 3, as the pressure of the second reactor was controlled to atmospheric pressure, the additional production of light oil (LO) and the resulting final yield were reduced compared to Example 1.

## Claims

1. A method of preparing pyrolysis oil from waste plastics, the method comprising:
(S1) feeding a waste plastic raw material to a first reactor, performing primary pyrolysis, and discharging a gaseous stream produced by the pyrolysis through an upper portion of the first reactor;
(S2) feeding the upper gaseous stream of the first reactor to one or more distillation columns and separating the upper gaseous stream according to boiling points to obtain a stream containing light oil (LO) of C₅₋₁₂, a stream containing middle oil (MO) of C₁₃₋₂₂, and a stream containing heavy oil (HO) of C₂₃ or higher; and
(S3) feeding a part of the stream containing the middle oil (MO) separated in the distillation column to a second reactor, performing secondary pyrolysis, and feeding a gaseous stream produced by the secondary pyrolysis to the distillation column,
wherein the primary pyrolysis and the secondary pyrolysis are each performed under high pressure conditions of 2 to 40 bar.

2. The method of claim 1, wherein the first reactor, the distillation column, and the second reactor are connected in series.

3. The method of claim 1, wherein the stream containing the middle oil (MO) separated in the distillation column has a boiling point of 210°C to 360°C.

4. The method of claim 1, wherein the stream containing the light oil (LO) is separated into a gas phase at an upper portion of the distillation column, and then exchanges heat with water in a condenser and recovered as liquid light oil (LO) .

5. The method of claim 4, wherein the water fed to the condenser is hot water of 60°C to 100°C, and waste heat of the gaseous stream is recovered through the heat exchange and converted into steam.

6. The method of claim 1, wherein an upper portion temperature of the distillation column is controlled to 150°C to lower than 220°C to discharge an upper gaseous stream containing 70% or more of light hydrocarbons.

7. The method of claim 1, wherein the primary pyrolysis in the first reactor is performed at 400°C to 450°C.

8. The method of claim 1, wherein the secondary pyrolysis in the second reactor is performed at 420°C to 450°C.

9. The method of claim 1, wherein a lower residue of the first reactor, the stream containing the heavy oil (HO) separated in the distillation column, and a lower residue of the second reactor are each fed to a residue treatment reactor, additional pyrolysis is performed, and then a gaseous stream produced by the additional pyrolysis is recycled to the distillation column.

10. The method of claim 1, wherein a content of the light oil (LO) is 50 to 70 wt% with respect to the weight of the waste plastic raw material.

11. The method of claim 1, wherein the waste plastic raw material is a mixture containing a material selected from the group consisting of polyethylene (PE), polypropylene (PP), and a combination thereof.

12. The method of claim 1, wherein the waste plastic raw material is fed to the pyrolysis reactor after being subjected to a pretreatment process including crushing, washing, drying, and melting.
